(19) Europäisches Patentamt European Patent Office Office européen des brevets

(11) **EP 1 713 734 B1**

(12) **FASCICULE DE BREVET EUROPEEN**

(45) Date de publication et mention de la délivrance du brevet:
**27.01.2016 Bulletin 2016/04**

(21) Numéro de dépôt: **05726339.4**

(22) Date de dépôt: **27.01.2005**

(51) Int Cl.:
*C03C 1/10* (2006.01)    *C03C 3/087* (2006.01)
*C03C 4/08* (2006.01)

(86) Numéro de dépôt international:
**PCT/FR2005/050048**

(87) Numéro de publication internationale:
**WO 2005/075368 (18.08.2005 Gazette 2005/33)**

(54) **COMPOSITION DE VERRE SILICO-SODO-CALCIQUE**

NATRONKALKGLASZUSAMMENSETZUNG

SILICO-SODO-CALCIC GLASS COMPOSITION

(84) Etats contractants désignés:
**AT BE BG CH CY CZ DE DK EE ES FI FR GB GR HU IE IS IT LI LT LU MC NL PL PT RO SE SI SK TR**

(30) Priorité: **30.01.2004 FR 0400922**

(43) Date de publication de la demande:
**25.10.2006 Bulletin 2006/43**

(73) Titulaire: **SAINT-GOBAIN EMBALLAGE**
**92400 Courbevoie (FR)**

(72) Inventeurs:
  • **MAQUIN, Bertrand**
    **F-75015 PARIS (FR)**
  • **FOSSE, Lucien**
    **F-76260 ETALONDES (FR)**

(74) Mandataire: **Teyssedre, Laurent et al**
**Saint-Gobain Recherche**
**39, quai Lucien Lefranc**
**B.P. 135**
**93303 Aubervilliers Cedex (FR)**

(56) Documents cités:
**EP-A- 0 619 274     EP-A- 0 653 385**
**WO-A-00/07952     WO-A-02/066388**
**US-A- 5 061 659**

  • **DATABASE WPI Section Ch, Week 197721 Derwent Publications Ltd., London, GB; Class L01, AN 1977-37285Y XP002294762 & JP 52 047812 A (SHIN NIPPON GLASS CO LTD) 16 avril 1977 (1977-04-16)**

**Description**

La présente invention se rapporte à une composition de verre silico-sodo-calcique destinée à la réalisation d'objets, en particulier en verre creux, ou encore se présentant sous la forme de feuilles de verre plat, ladite composition conférant à ces dits objets des propriétés de faible transmission du rayonnement ultraviolet, de forte transmission du rayonnement visible, et de coloration neutre.

Bien qu'elle ne soit pas limitée à une telle application, l'invention sera plus particulièrement décrite en référence à des applications dans le domaine des objets en verre creux tels que des bouteilles, des flacons ou encore des pots.

Les rayonnements ultraviolets (UV), en particulier solaires, peuvent interagir avec de nombreux liquides en dégradant parfois leur qualité. C'est par exemple le cas de certains liquides alimentaires, parmi lesquels certains vins, les spiritueux, la bière, ou l'huile d'olive, dont la couleur et le goût peuvent être altérés, ou encore de certains parfums, dont l'odeur peut être modifiée. Il y a donc un réel besoin, aussi bien dans l'industrie agro-alimentaire que cosmétique, de contenants en verre capables d'absorber la plus grande partie des rayonnements ultraviolets.

Des récipients en verre répondant à cette contrainte sont extrêmement courants, mais ils présentent en général de fortes colorations. Le vin ou la bière sont par exemple souvent conditionnés dans des bouteilles de teinte ambre ou verte, ces colorations étant obtenues par l'ajout de colorants tels que l'oxyde de chrome ou les sulfures d'éléments de transition, tels que les sulfures de fer. Ces récipients teintés présentent toutefois l'inconvénient de masquer la coloration du liquide qu'ils contiennent.

Dans certains cas, il peut être souhaitable, principalement pour des raisons esthétiques, de pouvoir pleinement apprécier la coloration du contenu, et donc de disposer de contenants présentant tout à la fois une transmission lumineuse élevée et une teinte neutre.

Des solutions destinées à résoudre ce problème technique sont décrites, qui consistent en général à ajouter à une composition de verre des oxydes absorbant préférentiellement les radiations ultraviolettes, tels que l'oxyde de cérium, ou encore l'oxyde de vanadium.

La publication US 6 407 021 décrit ainsi des récipients en verre dont la composition comprend de 0,2 à 1% en masse d'oxyde de cérium exprimé sous forme $CeO_2$, et de 0,01 à 0,08% d'oxyde de manganèse, exprimé sous forme $MnO_2$. Ce dernier oxyde est ajouté afin de compenser la teinte jaune-verte due à l'oxyde de fer contenu dans la composition à hauteur d'au moins 0,01%.

La demande JP 11-278863 décrit également l'utilisation de l'oxyde de cérium, dans des teneurs massiques comprises entre 0,1 et 1%, ainsi que de l'oxyde de cobalt, et optionnellement du sélénium, l'ajout de ces deux derniers éléments ayant encore pour but de « décolorer » le verre, c'est-à-dire de compenser la teinte jaune apportée par le cérium.

Le principal inconvénient de l'oxyde de cérium est sa relativement faible efficacité à absorber les rayonnements ultraviolets, ce qui contraint à utiliser des teneurs souvent supérieures à 0,5% en masse. En outre, il est connu de l'homme du métier que le cérium, seul ou en association avec certains éléments comme l'oxyde de vanadium, confère des propriétés de « solarisation » au verre, ce terme désignant des modifications de teinte subies par le verre lorsqu'il est soumis à des rayonnements énergétiques tels que les rayonnements ultraviolets.

L'oxyde de vanadium est un substitut intéressant à l'oxyde de cérium, car son pouvoir d'absorption des rayonnements UV est beaucoup plus intense que celui présenté par l'oxyde de cérium. Il peut toutefois présenter une coloration verte indésirable, ce qui impose l'ajout d'oxydes « décolorants ».

La demande WO 00/35819 décrit l'usage d'oxyde de vanadium et d'oxyde de phosphore, la teneur en oxyde de vanadium étant inférieure à 0,3% exprimée en pourcentage pondéral.

Dans la demande WO 02/066388 sont présentées des compositions contenant de faibles quantités d'oxydes de vanadium et de manganèse, respectivement comprises entre 0,04 et 0,10% et entre 0,04 et 0,13%, le rapport $V_2O_5/MnO$ étant compris entre 0,6 et 1,7. Toutefois, et même si l'oxyde de manganèse est décrit comme jouant un rôle décolorant, notamment par le biais de l'ion $Mn^{3+}$, les verres exemplifiés dans ce document présentent des longueurs d'ondes dominantes élevées, généralement de l'ordre de 560 à 570nm, témoignant d'une teinte légèrement jaune ou ambre. L'absorption des ultraviolets par les verres décrits dans les exemples est caractérisée par une transmission à la longueur d'ondes 330nm comprise entre 1 et 7%.

La demande JP-A-52-47812 décrit également des verres comprenant de faibles quantités d'oxyde de vanadium et d'oxyde de manganèse, mais considère comme nécessaire l'ajout d'oxyde de cérium (à hauteur d'au moins 0,15%) et de sélénium (au moins 0,004%, soit 40ppm, ce qui pour cet élément colorant est une teneur élevée).

La demande EP653385 décrit des verres plats pour bâtiment ou automobile de couleur bronze contenant de 0,06 à 0,18% d'oxyde de fer, de 0,36 à 0,65% d'oxyde de manganèse et de 0,08 à 0,20% d'oxyde de vanadium.

La présente invention a pour but de proposer une composition de verre silico-sodo-calcique pouvant être utilisée pour former des objets en verre creux possédant une faible transmission ultraviolette, une forte transmission dans les longueurs d'onde visibles, et une teinte neutre, afin de visualiser parfaitement l'aspect de leur contenu tout en protégeant les caractéristiques organoleptiques de ce dernier.

A cette fin, l'invention a pour objet un objet en verre creux formé par moulage, pressage ou soufflage caractérisé en ce qu'il présente une composition de verre silico-sodo-calcique ne contenant pas d'oxyde de cérium et comprenant les agents absorbants optiques ci-après dans une teneur variant dans les limites pondérales suivantes :

| | |
|---|---|
| $Fe_2O_3$ (fer total) | 0,01 à 0,15 % |
| $V_2O_5$ (vanadium total) | 0,11 à 0,40% |
| MnO (manganèse total) | 0,05 à 0,25% |

et en ce qu'il présente pour une épaisseur de 3 mm une transmission ultraviolette TUV, mesurée entre 295 et 380nm, inférieure ou égale à 40%, et des coordonnées chromatiques (a*, b*) sous illuminant C comprises entre -3 et +3.

$V_2O_5$ et MnO représentent respectivement les teneurs totales en oxyde de vanadium et de manganèse.

La transmission ultraviolette (TUV) des verres selon l'invention est calculée pour une épaisseur de 3mm, à partir d'un spectre expérimental mesuré, en utilisant la distribution spectrale solaire définie par Parry Moon (J. Franklin Institute, volume 230, pp 583-617, 1940) pour une masse d'air 2 et dans la plage de longueurs d'ondes allant de 295 à 380nm.

La TUV des verres selon l'invention est de préférence inférieure ou égale à 30% notamment inférieure ou égale à 25%, voire à 20%.

Les verres entrant dans le cadre de la présente invention sont des verres de teinte neutre c'est-à-dire qui présentent une courbe de transmission qui ne varie pratiquement pas en fonction de la longueur d'onde visible.

Dans le système C.I.E. (Commission Internationale de l'Eclairage), les corps idéalement neutres (ou gris) ne possèdent pas de longueur d'onde dominante et leur pureté d'excitation est nulle. Par extension, il est généralement admis comme gris tout corps dont la courbe est relativement plate dans le domaine visible mais qui présente néanmoins des bandes d'absorption faibles permettant de définir une longueur d'onde dominante et une pureté faible mais non nulle.

Les verres conformes à l'invention sont définis par la suite par leurs coordonnées chromatiques L*, a* et b* calculées à partir d'un spectre expérimental pour des échantillons de verre de 3mm d'épaisseur, en prenant en référence l'illuminant standard C et l'observateur de référence « CIE 1931 », tous deux définis par la C.I.E. En utilisant cette notation, un corps présentant une coloration neutre est caractérisé par un couple de paramètres (a*,b*) proche de (0,0). Les verres selon l'invention sont définis comme suit :

| | |
|---|---|
| a* | varie de -3 à +3 |
| b* | varie de -3 à +3 |

Des verres présentant une neutralité encore plus grande sont caractérisés de manière préférée par une valeur de a* de préférence comprise entre -2 et +2, notamment entre -1 et +1, et une valeur de b* de préférence comprise entre 0 et +3. Des valeurs de b* légèrement positives correspondent en effet à des verres présentant une légère coloration jaune, laquelle assure un meilleur rendu des couleurs qu'une coloration bleutée caractérisée par des valeurs de b* négatives.

L'utilisation des agents absorbants optiques précités dans les limites de l'invention permet de conférer les propriétés recherchées et aussi d'ajuster au mieux les propriétés optiques et énergétiques du verre.

L'action des agents absorbants pris individuellement est en général bien décrite dans la littérature.

La présence de fer dans une composition de verre peut résulter des matières premières, en tant qu'impuretés, ou d'un ajout délibéré visant à colorer le verre. Il est connu que le fer existe dans la structure du verre sous la forme d'ions ferriques ($Fe^{3+}$) et d'ions ferreux ($Fe^{2+}$). La présence d'ions $Fe^{3+}$ confère au verre une légère coloration jaune et permet d'absorber les radiations ultraviolettes. La présence d'ions $Fe^{2+}$ donne au verre une coloration bleu-vert plus prononcée et induit une absorption du rayonnement infrarouge. L'augmentation de la teneur en fer sous ses deux formes accentue l'absorption des radiations aux extrémités du spectre visible, cet effet se faisant au détriment de la transmission lumineuse.

Dans la présente invention, la teneur en fer total dans la composition est comprise entre 0,01 et 0,15%, de préférence entre 0,02 et 0,10%. Une teneur en fer inférieure à 0,01% nécessite d'avoir des matières premières ayant un degré de pureté élevé qui se traduit par un coût du verre bien trop important pour un usage en tant que bouteille ou flacon. Au-delà de 0,15% en fer, la composition de verre présente une transmission trop faible dans le domaine du visible et une teinte verte trop prononcée..

L'oxyde de vanadium existe sous trois degrés d'oxydation dans le verre. L'ion $V^{5+}$ est responsable de l'absorption des rayonnements ultraviolets, tandis que les ions $V^{4+}$ et $V^{3+}$ confèrent une coloration verte indésirable. Dans le cadre de la présente invention, et afin d'obtenir les valeurs de transmission UV désirées, la teneur totale en oxyde de vanadium exprimé sous forme $V_2O_5$ est impérativement supérieure ou égale à 0,11%, de préférence supérieure ou égale à 0,13%, voire 0,15% ou 0,16%, notamment supérieure ou égale à 0,20%, et de manière encore plus préférée supérieure ou égale à 0,25%. Pour des raisons essentiellement liées au coût élevé de l'oxyde de vanadium, la teneur en ce dernier est de préférence inférieure à 0,40%, notamment à 0,30% et même à 0,28%. Des teneurs en oxyde de vanadium comprises entre 0,11 et 0,17% permettent généralement d'obtenir des verres présentant une TUV de l'ordre de 20 à 40%, tandis que des quantités supérieures ou égales à 0,17%, voire à 0,19% sont souvent nécessaires pour assurer une TUV inférieure à 20%. Une teneur en oxyde de vanadium comprise entre 0,19 et 0,22% paraît dans ce cas particulièrement adaptée.

L'oxyde de manganèse existe dans le verre sous les formes oxydée ($Mn^{3+}$) et réduite ($Mn^{2+}$). Tandis que la forme réduite ne produit qu'une très faible coloration, les ions $Mn^{3+}$ confèrent au verre qui les contient une intense coloration rose ou violette. Comme il est bien connu de l'homme du métier, cette forme est particulièrement utile pour compenser la teinte verte attribuable à l'oxyde de fer et, dans le cas de la présente invention, à l'oxyde de vanadium. Les inventeurs ont néanmoins mis en évidence un effet bénéfique supplémentaire et inattendu de l'oxyde de manganèse sur la transmission UV, lorsqu'il est utilisé en combinaison avec l'oxyde de vanadium. Il a été découvert que l'ajout d'oxyde de manganèse permet de diminuer la teneur en oxyde de vanadium nécessaire pour atteindre une TUV donnée, ou encore de diminuer la TUV d'un verre contenant une quantité d'oxyde de vanadium donnée. De ce fait, les verres selon l'invention contiennent des teneurs en MnO (représentant la teneur totale en oxyde de manganèse) supérieures ou égales à 0,05%, de préférence supérieures ou égales à 0,09%, voire 0,10%, et de manière encore plus préférée, supérieures ou égales à 0,13%. Pour les raisons évoquées ci-dessous, les teneurs en MnO sont parfois avantageusement supérieures à 0,15%, notamment à 0,18%, et même à 0,20%. Pour éviter l'apparition d'une coloration rose ou violette indésirable, la teneur en MnO est maintenue inférieure ou égale à 0,25%, voire à 0,22%.

Les inventeurs ont également découvert que la proportion optimisée de MnO à introduire relativement à la quantité d'oxyde de vanadium pour atteindre une coloration neutre variait selon le procédé employé pour l'ajout des absorbants optiques, et notamment selon la température de ce procédé. Lorsque l'ajout des oxydes de vanadium et de manganèse ou de l'oxyde de manganèse seul se réalise dans le four de fusion par le procédé de « coloration en bassin », habituellement dans une gamme de température allant de 1400°C à 1500°C, le rapport R1, défini par la teneur pondérale en oxyde de manganèse rapportée à la teneur pondérale en oxyde de vanadium, est choisi préférentiellement entre 1,2 et 1,8, notamment supérieur ou égal à 1,5. Lorsque l'ajout de ces oxydes ou de l'oxyde de manganèse seul est réalisé dans un canal (ou « feeder ») assurant le transport du verre du four aux dispositifs de formage, habituellement à des températures de l'ordre de 1200°C à 1300°C, ce rapport R1 est choisi préférentiellement supérieur ou égal à 0,5, voire à 0,8 et inférieur ou égal à 1,2, voire à 1,0. Spécialement dans le cas d'un ajout en canal des oxydes de manganèse et de vanadium ou de l'oxyde de manganèse seul, une association d'une teneur en oxyde de vanadium comprise entre 0,19 et 0,22% et d'une teneur en oxyde de manganèse comprise entre 0,13 et 0,18% est particulièrement préférée. D'une manière générale, et quel que soit le mode d'introduction des oxydes de manganèse et de vanadium, le rapport R1 doit être augmenté si le verre présente une valeur de a* trop basse, et diminué si le verre présente une valeur de a* trop élevée.

L'oxyde de cobalt produit une coloration bleue intense et entraîne aussi une diminution de la transmission lumineuse. Son rôle dans la présente invention est de compenser une éventuelle composante jaune conférée par une teneur excessive en ion $Mn^{3+}$. La quantité doit donc être parfaitement contrôlée pour rendre la transmission lumineuse et la coloration compatibles avec l'usage auquel on destine le verre. Conformément à l'invention, la teneur en oxyde de cobalt est de préférence inférieure ou égale à 0,0025%, de préférence inférieure ou égale à 0,0020%, voire inférieure ou égale à 0,0015% et même à 0,0010%. Au-delà de 0,0025 %, la transmission lumineuse du verre devient en effet trop faible, et la teinte trop bleue.

Dans le cadre de la présente invention, une composition particulièrement préférée, en particulier lorsque les oxydes de vanadium et de manganèse sont introduits en bassin, comprend les agents absorbants optiques suivants dans une teneur variant dans les limites pondérales suivantes :

| | |
|---|---|
| $Fe_2O_3$ | 0,02 à 0,08 % |
| $V_2O_5$ | 0,16 à 0,25% |
| MnO | 0,20 à 0,25% |
| CoO | 0 à 0,0020% |

Une autre mode de réalisation préféré, en particulier lorsque les oxydes de vanadium et de manganèse ou l'oxyde de manganèse seul sont ajoutés en canal, consiste à choisir les gammes de compositions suivantes :

| | |
|---|---|
| $Fe_2O_3$ | 0,02 à 0,08 % |
| $V_2O_5$ | 0,19 à 0,22% |
| MnO | 0,13 à 0,18% |

(suite)

| | |
|---|---|
| CoO | 0 à 0,0010% |

En règle générale, il est difficile de prévoir les propriétés optiques et énergétiques d'un verre lorsque celui-ci contient plusieurs agents absorbants optiques. Ces propriétés résultent en effet d'une interaction complexe entre les différents agents dont le comportement est en outre lié à leur état d'oxydation. Cela est particulièrement le cas pour les compositions selon l'invention, lesquelles contiennent au moins trois oxydes existant sous plusieurs valences.

Dans la présente invention, le choix des absorbants optiques, de leur teneur et de leur état d'oxydoréduction est déterminant pour l'obtention des propriétés optiques requises.

Notamment, le rédox, défini par le rapport de la teneur molaire en oxyde ferreux (exprimé en FeO) à la teneur molaire en fer total (exprimé en $Fe_2O_3$), est inférieur à 0,2, de préférence inférieur ou égal à 0,1.

Le rédox est généralement contrôlé à l'aide d'agents oxydants tels que le sulfate de sodium, et d'agents réducteurs tels que du coke, dont les teneurs relatives sont ajustées pour obtenir le rédox souhaité. Les formes oxydées du vanadium et du manganèse peuvent également jouer un rôle d'oxydant vis-à-vis de l'oxyde de fer, ce qui rend la prévision des propriétés optiques d'un verre résultant d'un mélange donné particulièrement complexe, voire impossible.

La composition selon l'invention permet d'obtenir un verre possédant de préférence une transmission lumineuse globale $TL_C$, calculée pour une épaisseur de 3 mm à partir d'un spectre expérimental, en prenant en référence l'illuminant standard C et l'observateur de référence « CIE 1931 », supérieure ou égale à 70%, notamment supérieure ou égale à 80%, ce qui permet d'obtenir l'effet de transparence souhaité.

L'expression silico-sodo-calcique est ici utilisée dans le sens large et concerne toute composition de verre constituée d'une matrice verrière qui comprend les constituants suivants (en pourcentage en poids).

| | |
|---|---|
| $SiO_2$ | 64 - 75 % |
| $Al_2O_3$ | 0 - 5 % |
| $B_2O_3$ | 0 - 5 % |
| CaO | 5 - 15 % |
| MgO | 0 - 10 % |
| $Na_2O$ | 10 - 18 % |
| $K_2O$ | 0 - 5 % |
| BaO | 0 - 5 % |

On convient ici que la composition de verre silico-sodo-calcique peut comprendre, outre les impuretés inévitables contenues notamment dans les matières premières, une faible proportion (jusqu'à 1 %) d'autres constituants, par exemple des agents aidant à la fusion ou l'affinage du verre ($SO_3$, Cl, $Sb_2O_3$, $As_2O_3$) ou provenant d'un ajout éventuel de calcin recyclé dans le mélange vitrifiable.

Dans les verres selon l'invention, la silice est généralement maintenue dans des limites étroites pour les raisons suivantes. Au-dessus de 75 %, la viscosité du verre et son aptitude à la dévitrification augmentent fortement ce qui rend plus difficile sa fusion et sa coulée sur le bain d'étain fondu. Au-dessous de 64 %, la résistance hydrolytique du verre décroît rapidement et la transmission dans le visible diminue également.

L'alumine $Al_2O_3$ joue un rôle particulièrement important sur la résistance hydrolytique du verre. Lorsque le verre selon l'invention est destiné à former des corps creux contenant des liquides, la teneur en alumine est de préférence supérieure ou égale à 1%.

Les oxydes alcalins $Na_2O$ et $K_2O$ facilitent la fusion du verre et permettent d'ajuster sa viscosité aux températures élevées afin de le maintenir proche de celle d'un verre standard. $K_2O$ peut être utilisé jusqu'à 5 % car au-delà se pose le problème du coût élevé de la composition. Par ailleurs, l'augmentation du pourcentage de $K_2O$ ne peut se faire, pour l'essentiel, qu'au détriment de $Na_2O$ ce qui contribue à augmenter la viscosité. La somme des teneurs en $Na_2O$ et $K_2O$, exprimées en pourcentages pondéraux, est de préférence égale ou supérieure à 10 % et avantageusement inférieure à 20 %. Si la somme de ces teneurs est supérieure à 20 % ou si la teneur en $Na_2O$ est supérieure à 18 %, la résistance hydrolytique est fortement réduite.

Les oxydes alcalino-terreux permettent d'adapter la viscosité du verre aux conditions d'élaboration.

MgO peut être utilisé jusqu'à 10 % environ et sa suppression peut être compensée, au moins en partie, par une augmentation de la teneur en $Na_2O$ et/ou $SiO_2$. De préférence, la teneur en MgO est inférieure à 5 % et de manière particulièrement avantageuse est inférieure à 2 % ce qui a pour effet d'augmenter la capacité d'absorption dans l'infrarouge sans nuire à la transmission dans le visible. De faibles teneurs en MgO permettent en outre de diminuer le nombre de matières premières nécessaires à la fusion du verre.

BaO permet d'augmenter la transmission lumineuse et il peut être ajouté dans la composition dans une teneur inférieure à 5 %.

BaO a une influence beaucoup plus faible que CaO et MgO sur la viscosité du verre et l'augmentation de sa teneur se fait essentiellement au détriment des oxydes alcalins, de MgO et surtout de CaO. Toute augmentation de BaO contribue à augmenter la viscosité du verre aux basses températures. De manière préférée, les verres selon l'invention sont exempts de BaO.

Outre le respect des limites définies précédemment pour la variation de la teneur de chaque oxyde alcalino-terreux, il est préférable pour obtenir les propriétés de transmission recherchées de limiter la somme des pourcentages pondéraux de MgO, CaO et BaO à une valeur égale ou inférieure à 15 %.

La composition selon l'invention peut en outre comprendre des additifs, par exemple des agents absorbants dans certaines régions spectrales, tels que des oxydes d'éléments de transition (tels que $Cr_2O_3$, $TiO_2$, NiO, CuO...), ou des oxydes de terres rares (tels que $La_2O_3$, $Nd_2O_3$, $Er_2O_3$...), ou encore des agents colorants à l'état élémentaire (Se, Ag, Cu,). La teneur en de tels additifs est inférieure à 2%, et de préférence inférieure à 1%, et même à 0,5%, voire nulle (à l'exception d'impuretés inévitables). De manière particulièrement préférée, les verres selon l'invention ne contiennent pas d'oxydes de terres rares, et notamment pas d'oxyde de néodyme, lequel est extrêmement coûteux. Les verres ne contiennent pas d'oxyde de cérium, qui peut provoquer dans les verres pauvres en fer un phénomène de solarisation, le verre devenant brun sous l'effet de rayonnements énergétiques tels que le rayonnement UV. La teneur en sélénium est également avantageusement nulle, cet oxyde ayant une forte tendance à se volatiliser pendant la fusion du verre, nécessitant des équipements de dépollution coûteux.

La composition de verre conforme à l'invention est apte à être fondue dans les conditions de production du verre destiné au formage de corps creux par les techniques de pressage, de soufflage, de moulage. La fusion a généralement lieu dans des fours à flamme, éventuellement pourvus d'électrodes assurant le chauffage du verre dans la masse par passage du courant électrique entre les deux électrodes. Pour faciliter la fusion, et notamment rendre celle-ci mécaniquement intéressante, la composition de verre présente avantageusement une température correspondant à une viscosité $\eta$ telle que log $\eta$ = 2 qui est inférieure à 1500°C. De préférence encore, la température correspondant à la viscosité $\eta$ telle que log $\eta$ = 3,5 (notée T(log $\eta$ = 3,5)) et la température au liquidus (notée $T_{liq}$) satisfont la relation :

$$T(\log \eta = 3,5) - T_{liq} > 20°C$$

et mieux encore :

$$T(\log \eta = 3,5) - T_{liq} > 50°C$$

L'ajout des oxydes absorbants optiques peut être effectué dans le four (on parle alors de « coloration en bassin ») ou dans les canaux transportant le verre entre le four et les installations de formage (on parle alors de « coloration en feeder »). La coloration en feeder nécessite une installation particulière d'ajout et de mélange mais présente en revanche des avantages de souplesse et de réactivité particulièrement appréciés lorsque la production d'une gamme étendue de teintes et/ou de propriétés optiques particulières est requise. Dans le cas particulier de la coloration en feeder, les agents absorbants optiques sont incorporés dans des frittes de verre ou des agglomérés, lesquels sont ajoutés à un verre clair pour former après homogénéisation les verres selon l'invention. On peut employer des frittes différentes pour chaque oxyde ajouté, mais il peut être avantageux dans certains cas de disposer d'une fritte unique comprenant tous les agents absorbants optiques utiles. Il est souhaitable que les teneurs en oxyde de vanadium ou en oxyde de manganèse dans les frittes ou les agglomérés employés soient comprises entre 15 et 25%, de manière à ne pas dépasser des taux de dilution de fritte dans le verre fondu supérieurs à 2%. Au delà, il devient en effet difficile d'homogénéiser convenablement le verre fondu tout en conservant de fortes tirées compatibles avec un faible coût économique global du procédé. Il a également été observé que le degré d'oxydation du vanadium et du manganèse au sein des frittes jouait un rôle non-négligeable sur le rédox du verre final. Des frittes oxydées, donc contenant une majorité d'ions vanadium ou manganèse dans leur plus haut degré d'oxydation, permettent d'obtenir plus aisément les rédox préférés après mélange, et sont par conséquent employées préférentiellement. De même, un caractère oxydant des flammes situées au-dessus du bain de verre contenu dans le canal ou le feeder, et pouvant être obtenu par un réglage de l'apport de comburant par rapport au combustible tel que le comburant est apporté de manière sur-stoechiométrique, est préféré. Lorsque le comburant est l'oxygène ($O_2$) et le combustible est du méthane ($CH_4$), le rapport molaire $O_2/CH_4$ est de préférence supérieur ou égal à 2, notamment supérieur ou égal à 2,1, voire à 2,2. Selon un mode de réalisation préféré, seul l'oxyde de vanadium est ajouté en bassin, l'oxyde de manganèse étant quant à lui ajouté en canal, sous forme de frittes ou agglomérés.

La présente invention sera mieux comprise à la lecture de la description détaillée ci-après d'exemples de réalisation non limitatifs et de figures ci-jointes :

- Le tableau 1 illustre différentes compositions de verres ;
- Le tableau 2 illustre l'effet du rapport R1 entre la teneur pondérale en oxyde de manganèse et la teneur pondérale en oxyde de vanadium.

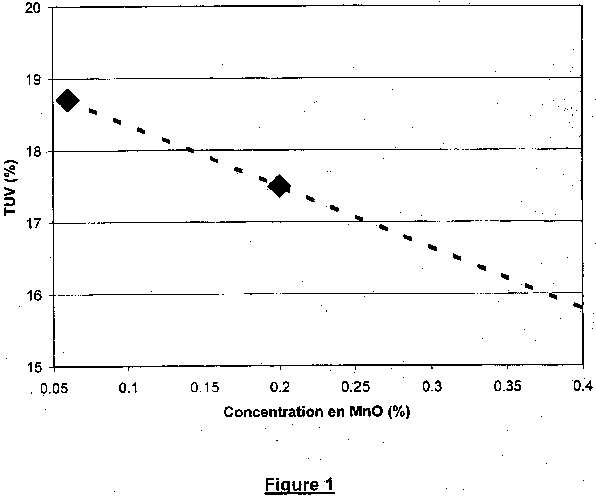

- La figure 1 illustre l'effet supplémentaire de l'oxyde de manganèse sur la TUV lorsqu'il est employé en combinaison avec de l'oxyde de vanadium.

Les exemples de compositions de verre données ci-après (tableaux 1 et 2) permettent de mieux apprécier les avantages liés à la présente invention.

Dans ces exemples, on indique les valeurs des propriétés optiques suivantes calculées sous une épaisseur de verre de 3 mm à partir de spectres expérimentaux :

- la transmission ultraviolette (TUV) calculée en utilisant la distribution spectrale solaire définie par Parry Moon (J. Franklin Institute, volume 230, pp 583-617, 1940) pour une masse d'air 2 et dans la plage de longueurs d'ondes allant de 295 à 380nm.
- le facteur de transmission lumineuse globale ($TL_C$), calculé entre 380 et 780 mm, ainsi que les coordonnées chromatiques L*, a* et b*. Ces calculs sont effectués en prenant en considération l'illuminant C tel que défini par la norme ISO/CIE 10526 et l'observateur de référence colorimétrique C.I.E. 1931 tel que défini par la norme ISO/CIE 10527.

Sont également indiqués dans les tableaux 1 et 2 :

- les teneurs pondérales en oxyde de fer, de vanadium, de manganèse et de cobalt,
- lorsqu'il a été mesuré, le rédox défini comme étant le rapport molaire du FeO au fer total exprimé sous forme de $Fe_2O_3$. La teneur en fer total est mesurée par fluorescence X et la teneur en FeO est mesurée par chimie utilisant la voie humide.
- Le rapport R1 égal à la teneur massique en oxyde de manganèse rapporté à la teneur massique en oxyde de vanadium.

Chacune des compositions figurant dans les tableaux 1 et 2 est réalisée à partir de la matrice verrière suivante, dont les teneurs sont exprimées en pourcentages pondéraux, celle-ci étant corrigée au niveau de la silice pour s'adapter à la teneur totale en agents colorants ajoutés.

| | |
|---|---|
| $SiO_2$ | 71,0 % |
| $Al_2O_3$ | 1,40 % |
| CaO | 12,0 % |
| MgO | 0,1 % |
| $Na_2O$ | 13,0 % |
| $K_2O$ | 0,35 % |

Les compositions de verre 1 à 8, décrites dans le tableau 1, ont été préparées par ajout d'oxydes absorbants optiques par un procédé de coloration en bassin. Elles illustrent l'effet important de l'oxyde de vanadium, couplé avec l'oxyde de manganèse, sur la TUV. L'exemple comparatif 1 est une composition de verre clair usuel, utilisé aussi bien en tant que verre creux ou plat. Sa TUV, qui dépasse 90% est abaissée à environ 40% pour un ajout de 0,11% d'oxyde de vanadium, puis en-dessous de 20% pour des ajouts à plus fortes teneurs. Les exemples 6, 7, 8 illustrent l'effet de l'oxyde de cobalt, qui sert à régler la valeur de b* pour obtenir, si désiré, des teintes très légèrement bleutées. On peut également noter que ces compositions, qui présentent un rapport R1 proche de 1,5, sont plus neutres que les compositions 3, 4, et 5, lesquelles ont un rapport R1 proche de 1. La plus forte neutralité se caractérise notamment par des valeurs de a* plus proches de la valeur 0. Ce point illustre l'importance du rapport R1 mise en évidence dans le cadre de la présente invention. L'exemple 1 montre que la teneur en $V_2O_5$ des verres selon l'invention doit impérativement être supérieure ou égale à 0,11% pour obtenir une transmission ultraviolette inférieure ou égale à 40%.

**Tableau 1**

| Exemple | Comparatif 1 | 1 | 2 | 3 | 4 | 5 | 6* | 7* | 8* | |
|---|---|---|---|---|---|---|---|---|---|---|
| $Fe_2O_3$ (%) | 0,02 | 0,04 | 0,09 | 0,09 | 0,06 | 0,06 | 0,02 | 0,06 | 0,06 | |
| Rédox | 0,3 | <0,1 | | | | | | | | |
| $V_2O_5$ (%) | - | 0,11 | 0,21 | 0,21 | 0,25 | 0,25 | 0,20 | 0,20 | 0,20 | |
| MnO (%) | - | 0,15 | 0,06 | 0,20 | 0,25 | 0,25 | 0,30 | 0,30 | 0,30 | |
| CoO (%) | - | 0,0011 | - | - | - | 0,0015 | - | 0,0015 | 0,0025 | |
| R1 | | 1,4 | 0,2 | 1,0 | 1,0 | 1,0 | 1,5 | 1,5 | 1,5 | |
| | | | | | | | | | | |
| TUV (%) | 90,1 | 39.8 | 18,7 | 17,5 | 17,9 | 17,7 | 19,8 | 19,1 | 19,2 | |
| $TL_C$ (%) | 92,1 | 85,9 | 86,7 | 85,3 | 85,9 | 82,4 | 83,7 | 83,3 | 79,8 | |
| a* | -0,2 | -1,1 | -2,3 | -2,1 | -1,0 | -1,1 | 0,1 | -0,2 | -0,2 | |
| b* | 0,1 | 0,5 | 2,3 | 2,6 | 2,9 | 0,8 | 2,7 | 1,2 | -0,5 | |
| **\* : les exemples 6 à 8 sont hors invention** | | | | | | | | | | |

Les exemples présentés dans le tableau 2 illustrent également l'importance que peut prendre le rapport R1 sur les propriétés optiques en fonction du procédé d'ajout de matières optiquement actives.

Les deux exemples présentés (exemple comparatif 2 et exemple selon l'invention, 9) contiennent les mêmes teneurs en oxydes de vanadium, de manganèse et de cobalt, et sont caractérisées par un rapport R1 proche de 1,5, mais l'ajout de ces oxydes a été réalisé dans des conditions différentes. Tandis que ce rapport R1 est particulièrement bien adapté aux conditions d'ajout des oxydes absorbants dans le four, et permet d'obtenir un verre particulièrement neutre (exemple 9), ce même rapport est, dans ce cas précis, mal adapté aux conditions d'ajout des oxydes absorbants dans le feeder, puisque l'exemple comparatif 2 présente une coloration pourpre très prononcée caractérisée par des valeurs de a* et b* très élevées et une $TL_C$ faible. L'exemple 10, réalisé par coloration en feeder montre au contraire qu'un rapport R1 beaucoup plus faible est bien plus adapté à ce mode de coloration.

**Tableau 2**

| Exemple | Comparatif 2 | 9 | 10 |
|---|---|---|---|
| $Fe_2O_3$ (%) | 0,04 | 0,09 | 0,05 |
| Rédox | | | 0 |
| $V_2O_5$ (%) | 0,17 | 0,17 | 0,19 |
| MnO (%) | 0,25 | 0,25 | 0,14 |
| CoO (%) | 0,0010 | 0,0010 | 0,0006 |
| R1 | 1,5 | 1,5 | 0,7 |
| Coloration | Feeder | Four | Feeder |
| | | | |
| TUV (%) | 19,8 | 20,0 | 20,6 |
| $TL_C$ (%) | 58,2 | 78,0 | 83,1 |
| a* | 7,8 | 0,3 | -0,2 |
| b* | 3,1 | 1,0 | 2,1 |

La Figure 1 présente l'effet de l'oxyde de manganèse sur la TUV de verres comprenant 0,09% de $Fe_2O_3$ et 0,21 % de $V_2O_5$ (exemples 2 et 3 selon l'invention).

On peut constater l'effet intéressant de l'oxyde de manganèse en combinaison avec l'oxyde de vanadium. Cet effet bénéfique est surprenant car seul l'effet décolorant de l'oxyde de manganèse, qui repose sur une absorption dans le domaine du visible et non de l'ultraviolet, était connu de l'homme du métier.

**Revendications**

**1.** Objet en verre creux formé par moulage, pressage ou soufflage présentant une composition de verre sitico-sodo-calcique comprenant les constituants suivants, en pourcentage en poids :

| | |
|---|---|
| $SiO_2$ | 64 - 75 % |
| $Al_2O_3$ | 0 - 5 % |
| $B_2O_3$ | 0 - 5 % |
| CaO | 5 - 15 % |
| MgO | 0 - 10 % |
| $Na_2O$ | 10 - 18 % |
| $K_2O$ | 0 - 5 % |
| BaO | 0 - 5 % |

et ne contenant pas d'oxyde de cérium, **caractérisé en ce que** ladite composition comprend les agents absorbants optiques ci-après dans une teneur variant dans les limites pondérales suivantes :

| | |
|---|---|
| $Fe_2O_3$ (fer total) | 0,01 à 0,15 % |
| $V_2O_5$ (vanadium total) | 0,11 à 0,40% |
| MnO (manganèse total) | 0,05 à 0,25% |

**en ce que** le rédox du verre est inférieur ou égal à 0,2,
**et en ce qu'**il présente pour une épaisseur de 3 mm une transmission ultraviolette TUV, mesurée entre 295 et 380nm, inférieure ou égale à 40%, et des coordonnées chromatiques (a*, b*) sous illuminant C comprises entre -3 et +3.

**2.** Objet selon la revendication 1, **caractérisé en ce que** la teneur en MnO est supérieure ou égale à 0,10%, notamment 0,13%.

**3.** Objet selon la revendication 1 ou 2, **caractérisé en ce qu'**elle contient de l'oxyde de cobalt CoO à une teneur inférieure ou égale à 0,0025%.

**4.** Objet selon l'une des revendications précédentes, **caractérisé en ce que** la teneur en $V_2O_5$ est supérieure ou égale à 0,16%, notamment comprise entre 0,19 et 0,22%.

**5.** Objet selon l'une des revendications précédentes, **caractérisé en ce qu'**il présente pour une épaisseur de 3mm une transmission ultraviolette inférieure ou égale à 20%.

**6.** Objet selon l'une des revendications précédentes, **caractérisé** en ce **qu'**il présente pour une épaisseur de 3mm une coordonnée chromatique a* mesurée sous illuminant C comprise entre - 2 et 2, de préférence entre -1 et 1

**7.** Objet selon l'une des revendications précédentes, **caractérisé en ce qu'**il présente pour une épaisseur de 3mm une coordonnée chromatique b* mesurée sous illuminant C comprise entre 0 et 3.

**8.** Objet selon l'une des revendications précédentes, **caractérisé en ce qu'**il présente pour une épaisseur de 3mm un facteur de transmission lumineuse sous illuminant C supérieur ou égal à 70%, de préférence supérieur ou égal à 80%.

**9.** Objet selon l'une des revendications précédentes, **caractérisé en ce que** sa composition comprend les agents colorants ci-après dans une teneur variant dans les limites pondérales suivantes :

| | |
|---|---|
| $Fe_2O_3$ (fer total) | 0,02 à 0,08 % |
| $V_2O_5$ (vanadium total) | 0,16 à 0,25% |
| MnO (manganèse total) | 0,20 à 0,25% |
| CoO | 0 à 0,0020% |

**10.** Objet selon l'une des revendications 1 à 8, **caractérisé en ce que** sa composition comprend les agents colorants ci-après dans une teneur variant dans les limites pondérales suivantes :

| | |
|---|---|
| $Fe_2O_3$ (fer total) | 0,02 à 0,08 % |
| $V_2O_5$ (vanadium total) | 0,19 à 0,22% |
| MnO (manganèse total) | 0,13 à 0,18% |
| CoO | 0 à 0,0010% |

**11.** Objet selon l'une des revendications précédentes, **caractérisé en ce que** le rédox du verre est inférieur ou égal à 0,1.

**12.** Procédé de fabrication d'un objet selon la revendication 1 et **caractérisé en outre par** un rapport $MnO/V_2O_5$ compris entre 1,2 et 1,8, comprenant une étape de fusion du mélange vitrifiable dans un four de fusion, ledit mélange vitrifiable apportant l'intégralité des oxydes compris dans ladite composition, et une étape de formage dudit verre pour obtenir un objet creux.

**13.** Procédé de fabrication d'un objet selon la revendication 1 et **caractérisé en outre par** un rapport $MnO/V_2O_5$ compris entre 0,5 et 1,2 comprenant une étape de fusion d'une partie du mélange vitrifiable, une étape de transport du verre fondu jusqu'au dispositif de formage, pendant laquelle on ajoute audit verre fondu des oxydes par le biais de frittes de verre ou d'agglomérés, la totalité des oxydes de vanadium et de manganèse ou l'oxyde de manganèse seul étant apportés à la composition durant cette étape, et une étape de formage dudit verre pour obtenir un objet creux.

**14.** Procédé selon la revendication précédente, **caractérisé en ce que** le rapport $MnO/V_2O_5$ est compris entre 0,8 et 1,2.

**Patentansprüche**

**1.** Hohler Glasgegenstand, der durch Gießen, Pressen oder Blasen gebildet ist, mit einer Kalk-Natron-Silikat-Glaszusammensetzung, die die folgenden Bestandteile in Gewichtsprozent umfasst:

| | |
|---|---|
| $SiO_2$ | 64 - 75 % |
| $Al_2O_3$ | 0 - 5 % |
| $B_2O_3$ | 0 - 5 % |
| CaO | 5 - 15 % |
| MgO | 0 - 10 % |
| $Na_2O$ | 10 - 18 % |
| $K_2O$ | 0 - 5 % |
| BaO | 0 - 5 % |

und die kein Ceroxid enthält, **dadurch gekennzeichnet, dass** die Zusammensetzung die nachstehenden optischen Absorptionsmittel in einem innerhalb der folgenden Gewichtsgrenzen variierenden Gehalt umfasst:

| | |
|---|---|
| $Fe_2O_3$ (Gesamteisen) | 0,01 bis 0,15 % |
| $V_2O_5$ (Gesamtvanadium) | 0,11 bis 0,40 % |
| MnO (Gesamtmangan) | 0,05 bis 0,25 % |

dass das Redoxpotential des Glases kleiner als oder gleich 0,2 ist,
und dass er bei einer Dicke von 3 mm eine UV-Durchlässigkeit UVT, gemessen zwischen 295 und 380 nm, von weniger als oder gleich 40 % und Farbkoordinaten (a*, b*) unter Lichtart C im Bereich zwischen -3 und +3 aufweist.

**2.** Gegenstand nach Anspruch 1, **dadurch gekennzeichnet, dass** der Gehalt an MnO mehr als oder gleich 0,10 %, insbesondere 0,13 % beträgt.

**3.** Gegenstand nach Anspruch 1 oder 2, **dadurch gekennzeichnet, dass** sie Kobaltoxid CoO in einem Gehalt von weniger als oder gleich 0,0025 % enthält.

**4.** Gegenstand nach einem der vorhergehenden Ansprüche, **dadurch gekennzeichnet, dass** der Gehalt an $V_2O_5$ mehr als oder gleich 0,16 % beträgt, insbesondere zwischen 0,19 und 0,22 % liegt.

**5.** Gegenstand nach einem der vorhergehenden Ansprüche, **dadurch gekennzeichnet, dass** er bei einer Dicke von 3 mm eine UV-Durchlässigkeit von weniger als oder gleich 20 % aufweist.

**6.** Gegenstand nach einem der vorhergehenden Ansprüche, **dadurch gekennzeichnet, dass** er bei einer Dicke von 3 mm eine unter Lichtart C gemessene Farbkoordinate a* im Bereich zwischen -2 und 2, vorzugsweise zwischen -1 und 1 aufweist.

**7.** Gegenstand nach einem der vorhergehenden Ansprüche, **dadurch gekennzeichnet, dass** er bei einer Dicke von 3 mm eine unter Lichtart C gemessene Farbkoordinate b* im Bereich zwischen 0 und 3 aufweist.

**8.** Gegenstand nach einem der vorhergehenden Ansprüche, **dadurch gekennzeichnet, dass** er bei einer Dicke von 3 mm einen Lichtdurchlassgrad unter Lichtart C von mehr als oder gleich 70 %, vorzugsweise mehr als oder gleich 80 % aufweist.

**9.** Gegenstand nach einem der vorhergehenden Ansprüche, **dadurch gekennzeichnet, dass** seine Zusammensetzung die nachstehenden Farbstoffe in einem innerhalb der folgenden Gewichtsgrenzen variierenden Gehalt umfasst:

| | |
|---|---|
| $Fe_2O_3$ (Gesamteisen) | 0,02 bis 0,08 % |
| $V_2O_5$ (Gesamtvanadium) | 0,16 bis 0,25 % |
| MnO (Gesamtmangan) | 0,20 bis 0,25 % |
| CoO | 0 bis 0,0020 % |

**10.** Gegenstand nach einem der Ansprüche 1 bis 8, **dadurch gekennzeichnet, dass** seine Zusammensetzung die nachstehenden Farbstoffe in einem innerhalb der folgenden Gewichtsgrenzen variierenden Gehalt umfasst:

| | |
|---|---|
| $Fe_2O_3$ (Gesamteisen) | 0,02 bis 0,08 % |
| $V_2O_5$ (Gesamtvanadium) | 0,19 bis 0,22 % |
| MnO (Gesamtmangan) | 0,13 bis 0,18 % |
| CoO | 0 bis 0,0010 % |

**11.** Gegenstand nach einem der vorhergehenden Ansprüche, **dadurch gekennzeichnet, dass** das Redoxpotential des Glases kleiner als oder gleich 0,1 ist.

**12.** Verfahren zur Herstellung eines Gegenstands nach Anspruch 1 und ferner **gekennzeichnet durch** ein MnO/$V_2O_5$-Verhältnis zwischen 1,2 und 1,8, umfassend einen Schritt zum Schmelzen der verglasbaren Mischung in einem Schmelzofen, wobei die verglasbare Mischung sämtliche in der Zusammensetzung enthaltenen Oxide mitbringt, sowie einen Schritt zum Formen des Glases, um einen hohlen Gegenstand zu erhalten.

**13.** Verfahren zur Herstellung eines Gegenstands nach Anspruch 1 und ferner **gekennzeichnet durch** ein MnO/$V_2O_5$-Verhältnis zwischen 0,5 und 1,2, umfassend einen Schritt zum Schmelzen eines Teils der verglasbaren Mischung, einen Schritt zum Transportieren des geschmolzenen Glases bis zu der Formungsvorrichtung, im Laufe dessen dem geschmolzenen Glas Oxide mittels Glasfritten oder Agglomeraten zugegeben werden, wobei die Gesamtheit der Vanadium- und Manganoxide oder das Manganoxid allein der Zusammensetzung während dieses Schrittes zugegeben werden, sowie einen Schritt zum Formen des Glases, um einen hohlen Gegenstand zu erhalten.

**14.** Verfahren nach dem vorhergehenden Anspruch, **dadurch gekennzeichnet, dass** das MnO/$V_2O_5$-Verhältnis zwischen 0,8 und 1,2 liegt.

**Claims**

1.  Glass hollowware formed by moulding, pressing or blowing having a soda-lime-silicate glass composition comprising the following constituents (in percentages by weight):

    | | |
    |---|---|
    | $SiO_2$ | 64-75% |
    | $Al_2O_3$ | 0-5% |
    | $B_2O_3$ | 0-5% |
    | CaO | 5-15% |
    | MgO | 0-10% |
    | $Na_2O$ | 10-18% |
    | $K_2O$ | 0-5% |
    | BaO | 0-5% |

    And not comprising cerium oxide, **characterized in that** it includes the optical absorbents below, in contents varying within the following weight limits:

    | | |
    |---|---|
    | $Fe_2O_3$ (total iron) | 0.01 to 0.15% |
    | $V_2O_5$ (total vanadium) | 0.11 to 0.40% |
    | MnO (total manganese) | 0.05 to 0.25% |

    **in that** the redox state of the glass does not exceed 0.2
    **and in that** the glass has, for a thickness of 3 mm, an ultraviolet transmission $T_{UV}$, measured between 295 and 380 nm, not exceeding 40% and chromatic coordinates (a*,b*) under illuminant C of between -3 and +3.

2.  Composition according to Claim 1, **characterized in that** the MnO content is not less than 0.10%, especially 0.13%.

3.  Composition according to Claim 1 or 2, **characterized in that** it contains cobalt oxide (CoO) with a content not exceeding 0.0025%.

4.  Composition according to one of the preceding claims, **characterized in that** the $V_2O_5$ content is not less than 0.16%, especially between 0.19 and 0.22%.

5.  Composition according to one of the preceding claims, **characterized in that** the glass has, for a thickness of 3 mm, an ultraviolet transmission not exceeding 20%.

6.  Composition according to one of the preceding claims, **characterized in that** the glass has, for a thickness of 3 mm, a chromatic coordinate a* measured under illuminant C of between -2 and 2, preferably between -1 and 1.

7.  Composition according to one of the preceding claims, **characterized in that** the glass has, for a thickness of 3 mm, a chromatic coordinate b* measured under illuminant C of between 0 and 3.

8.  Composition according to one of the preceding claims, **characterized in that** the glass has, for a thickness of 3 mm, a light transmission factor under illuminant C of not less than 70%, preferably not less than 80%.

9.  Composition according to one of the preceding claims, **characterized in that** it includes the colouring agents below in contents varying within the following weight limits:

    | | |
    |---|---|
    | $Fe_2O_3$ (total iron) | 0.02 to 0.08% |
    | $V_2O_5$ (total vanadium) | 0.16 to 0.25% |
    | MnO (total manganese) | 0.20 to 0.25% |
    | CoO | 0 to 0.0020%. |

10. Composition according to one of Claims 1 to 8, **characterized in that** it includes the colouring agents below in contents varying within the following weight limits:

| | |
|---|---|
| $Fe_2O_3$ (total iron) | 0.02 to 0.08% |
| $V_2O_5$ (total vanadium) | 0.19 to 0.22% |
| MnO (total manganese) | 0.13 to 0.18% |
| CoO | 0 to 0.0010%. |

11. Composition according to one of the preceding claims, **characterized in that** the redox state of the glass does not exceed 0.1.

12. Process for manufacturing a glass hollowware according to Claim 1 and furthermore **characterized by** an $MnO/V_2O_5$ ratio of between 1.2 and 1.8, which includes a step of melting the batch mix in a melting furnace, the said batch mix providing all of the oxides in the said composition, and a step of forming the said glass in order to obtain hollowware.

13. Process for manufacturing a glass hollowware according to Claim 1 and furthermore **characterized by** an $MnO/V_2O_5$ ratio of between 0.5 and 1.2, which includes a step of melting part of the batch mix, a step of transporting the molten glass to the forming device, during which step oxides are added to the said molten glass by means of glass frits or agglomerates, all of the vanadium and manganese oxides, or the manganese oxide alone, being added to the composition during this step, and a step of forming the said glass in order to obtain hollowware.

14. Process according to the preceding claim, **characterized in that** the $MnO/V_2O_5$ ratio is between 0.8 and 1.2.

**Figure 1**

**EP 1 713 734 B1**

**RÉFÉRENCES CITÉES DANS LA DESCRIPTION**

**Documents brevets cités dans la description**

- US 6407021 B
- JP 11278863 A
- WO 0035819 A
- WO 02066388 A
- JP 52047812 A
- EP 653385 A

**Littérature non-brevet citée dans la description**

- **PARRY MOON.** *J. Franklin Institute,* 1940, vol. 230, 583-617